# EUROPÄISCHE PATENTSCHRIFT

(11) **EP 0 935 088 B1**
(45) Veröffentlichungstag und Bekanntmachung des Hinweises auf die Patenterteilung: **24.10.2001**
(21) Anmeldenummer: 99102104.9
(22) Anmeldetag: 03.02.1999
(51) Int. Cl.: F16L 41/04, F16L 55/105, F16L 41/06

(54) **Vorrichtung zur Anbringung von Funktionselementen an einer Leitung**
Device for mounting functional elements to a pipe
Dispositif pour fixer des éléments fonctionnels à un tuyau

(30) Priorität: 04.02.1998 DE 29801734 U
(43) Veröffentlichungstag der Anmeldung: 11.08.1999
(73) Patentinhaber: Roth, Udo, 64380 Rossdorf (DE)
(72) Erfinder: Roth, Udo, 64380 Rossdorf (DE)
(74) Vertreter: KEIL & SCHAAFHAUSEN

(56) Entgegenhaltungen:
- US-A- 2 763 282
- US-A- 4 552 170
- US-A- 5 620 020

## Beschreibung

Die Erfindung betrifft eine Vorrichtung zum Anbringen von Funktionselementen, wie Schiebern, Ventilen, Wasser- oder Wärmemengezählern, Mischern, Kugelhähnen oder dergleichen, an einer Leitung, insbesondere einer druckführenden Rohrleitung, mit einem an der Rohrleitung anzubringenden Halteelement, in dem eine Durchtrittsöffnung für das in der Leitung fließende Medium und eine von der Durchtrittsöffnung abzweigende Zugangsöffnung ausgebildet sind.

Bei bestehenden Rohrleitungen ist es immer wieder notwendig, Funktionselemente einzusetzen, beispielsweise um das Rohrleitungsnetz zu erweitern, schadhafte Ventile oder dergleichen auszutauschen oder Meßinstrumente in das Leitungssystem zu integrieren. Normalerweise wird hierzu in dem zu bearbeitenden Leitungsbereich die Zufuhr des in der Leitung geführten Mediums, üblicherweise Wasser, abgestellt und das in der Leitung befindliche Wasser oder dergleichen abgelassen. Dann wird die Leitung aufgeschnitten und das Funktionselement an der Schnittstelle eingebracht. Bei Arbeiten an Versorgungsleitungen werden hierbei aber ggf. ganze Gebäudetrakte von der Wasserzufuhr abgeschnitten und für das Ablassen des im Leitungsabschnitt vorhandenen Wassers wird Zeit benötigt und Wasser vergeudet. Auch das spätere Wiederbefüllen ist aufwendig, da hierfür beispielsweise in größeren Heizungsanlagen eine Entlüftung erforderlich ist, um Luftgeräusche zu vermeiden. während dies in Einzelhaushalten während der für das Einsetzen der Funktionselemente benötigten Zeit noch zumutbar sein kann, ist es in größeren Einrichtungen, beispielsweise Krankenhäusern, Fabriken oder auch Mehrfamilienhäusern, nicht tragbar. Dennoch wurden in der Vergangenheit während der Arbeiten an Wasserleitungen ganze Stationen, Operationssäle und dergleichen von der Wasserversorgung abgeschnitten und die medizinische Betreuung beeinträchtigt. Andererseits wird aufgrund des Aufwandes auf das Anbringen von Wasser- oder Wärmemengenzählern verzichtet. Um diesen Mißstand zu beseitigen, wurde bereits vorgeschlagen, den Bereich der Wasserleitung, an dem ein Funktionselement anzubringen oder eine Reparatur durchzuführen ist, durch Einfrieren der Rohrleitung zu isolieren. Abgesehen davon, daß auch dies mit einer vorübergehenden Unterbrechung der Wasserzufuhr verbunden ist, besteht hierbei die Gefahr, daß der sich in der Rohrleitung bildende Eispfropfen durch den Leitungsdruck losgerissen wird und dann erhebliche Wassermengen aus der Wasserleitung austreten.

Aus US-A-4 552 170 ist es bekannt, ein Absperrventil nachträglich an einer druckführenden Rohrleitung anzubringen. Hierbei wird über eine Verbindungseinheit eine Schleuse an der Rohrleitung angebracht und über einen Bohrer ein Loch in die Leitung gebohrt. Anschließend wird der Bohrer weiter eingeführt, so daß ein dem Bohrer folgender Zylindrischer Bereich die Rohrleitung absperrt. Da der eingesetzte Zylindriche Bereich aber unmittelbar gegenüber der frisch angebrachten Bohrung gedreht wird, besteht, insbesondere bei längerer Benutzung, die Gefahr von Leckage.

Aufgabe der Erfindung ist es daher, das Anbringen und die dauerhafte Funktion von Funktionselementen an einer druckführenden Leitung zuverlässig zu gewährleisten, ohne daß die Medienzufuhr abgestellt und das in der Leitung geförderte Medium abgelassen werden muß.

Diese Aufgabe wird mit der Erfindung im wesentlichen dadurch gelöst, daß in die Durchtrittsöffnung des Halteelements ein durch die Zugangsöffnung einführbarer, austauschbarer Funktionseinsatz einsetzbar ist, der eine Durchtrittsöffnung für das in der Leitung fließende Medium und eine Aufnahmeöffnung für das Funktionselement aufweist.

Das Halteelement umgreift die Rohrleitung manschettenartig, um nach dem notwendigen Durchtrennen der Leitung die Leitungsabschnitte zuverlässig und dicht miteinander zu verbinden. Der Funktionseinsatz verschließt die beim Durchtrennen der Leitung entstehende Öffnung wieder zuverlässig und kann gleichzeitig zur Bedienung des Funktionselementes verwendet werden. So kann der Funktionseinsatz einen Schieber, Kugelhahn oder ein Ventil zum Verschließen der Leitung oder einem Wasser- oder Wärmemengenzähler tragen und ist in seiner Gestaltung an das Funktionselement anzupassen. Da der Funktionseinsatz selbst gegenüber der Bohrung nicht mehr bewegt wird, besteht keine Gefahr einer sich langsam ausbildenden Undichtigkeit. Andererseits kann die Paarung Funktionseinsatz/Funktionselement vorab so angepaßt werden, daß auch bei dauerhaftem Betrieb und Relativbewegungen zueinander Undichtigkeiten ausgeschlossen werden. Schließlich erlaubt der Funktionseinsatz den beliebigen Einsatz unterschiedlicher Funktionselemente je nach Bedarf.

Der Funktionseinsatz ist erfindungsgemäß verdrehsicher in der Zugangsöffnung des Halteelements aufgenommen, um eine korrekte Positionierung des Funktionselements relativ zu der Leitung zu gewährleisten.

Die Verdrehsicherung wird vorzugsweise dadurch bewirkt, daß die Zugangsöffnung und der Funktionseinsatz wenigstens abschnittsweise unrund ausgebildet sind. So können sie oval, rechteckig oder dergleichen geformt sein.

Bei einer besonders bevorzugten Ausführungsform sind jedoch in der Zugangsöffnung des Halteelements Führungsnuten ausgebildet, in welche an dem Funktionseinsatz ausgebildete Vorsprünge eingreifen. Die Positionierung des Funktionselements erfolgt somit formschlüssig. Gleichzeitig kann über die in die Führungsnuten eingreifenden Vorsprünge eine Abdichtung des Funktionselements ermöglicht werden.

Zur korrekten axialen Positionierung des Funktionselementes in dem Halteelement weist der Funktionseinsatz einen vorzugsweise umlaufenden Vorsprung auf, der an dem Halteelement anliegt. Dieser Vorsprung kann gleichzeitig zur Abdichtung verwendet werden. Hierbei ist es von Vorteil, wenn der Funktionseinsatz aus Kunststoff besteht.

Das Funktionselement kann an einem in der Zugangsöffnung ausgebildeten Innengewinde druckdicht befestigt werden und dadurch den Funktionseinsatz in dem Halteelement halten.

Gemäß einer bevorzugten Ausgestaltung der Erfindung weist das Halteelement zwei um die Rohrleitung anzubringende Flanschelemente auf, die einen der Rohrleitung angepaßten Aufnahmeabschnitt aufweisen und miteinander über Befestigungsschrauben, Nieten oder dergleichen verbindbar sind. Sind die beiden Flanschelemente identisch ausgebildet, so kann die Lagerhaltung unterschiedlicher Teile reduziert werden. Es muß lediglich der Aufnahmeabschnitt der Halteelemente an die genormten Rohrleitungsdurchmesser angepaßt sein. Alternativ kann aber auch vorgesehen sein, das Halteelement aus einem Stück herzustellen, so daß es beim Aufbau der Rohrleitung eingesetzt wird, um später eine Funktionsänderung zu ermöglichen.

In Weiterbildung dieses Erfindungsgedankens verläuft auf der Innenseite der Flanschelemente ein vorzugsweise umlaufendes Dichtungselement, so daß die Flanschelemente gegeneinander aber auch gegenüber der Rohrleitung abgedichtet sind. Somit wird verhindert, daß beim Öffnen der Rohrleitung Wasser über die Anlagenflächen der Halteelemente austritt.

Zur einfachen Befestigung der Schleuse ist die Zugangsöffnung in einem Montagestutzen mit einem Außengewinde, einer Kupplung oder dergleichen ausgebildet. Dadurch kann die Schleuse beispielsweise über eine an ihr vorgesehene Überwurfmutter an dem Halteelement befestigt werden. Die nicht verwendete Zugangsöffnung des einen Flanschelements kann über einen auf den Montagestutzen aufgeschraubten Stopfen mit einer Dichtscheibe verschlossen werden. Bei manchen Anwendungen, beispielsweise bei Anbringen eines Mischers werden aber auch beide Montagestutzen zum Anbringen eines Funktionselements und beispielsweise eines Rohrabzweigs genutzt.

Zum Anbringen der Öffnung für das Funktionselement in der Leitung und zum Einführen des Funktionselementes in die geöffnete Leitung ist erfindungsgemäß ein Schleusenaufsatz vorgesehen, der an dem Halteelement angebracht wird und zwei über eine Absperrvorrichtung wahlweise verbindbare oder trennbare Kammern aufweist, wobei die erste Kammer mit der Zugangsöffnung in dem Halteelement verbunden wird, wobei die zweite Kammer über ein Verschlußelement verschließbar ist und wobei das Verschlußelement eine Durchtrittsöffnung für die Durchführung einer ein Werkzeug, Funktionselement oder dergleichen tragenden Achse aufweist, welche gegenüber der Durchtrittsöffnung abgedichtet ist. Die Vorrichtung kann über das Halteelement an der druckführenden Leitung angebracht werden, woraufhin diese über ein durch die Schleuse hindurchgeführtes Werkzeug, beispielsweise eine Bohrkrone, angebohrt werden kann. Anschließend wird das Werkzeug bis in die zweite Kammer der Schleuse zurückgezogen und die Schleuse über die Absperrvorrichtung geschlossen. Nun kann das Werkzeug gegen ein in die Rohrleitung einzusetzendes Funktionselement ausgetauscht werden, ohne daß das in der Leitung geführte Medium nach außen austreten kann. Lediglich das in die zweite Kammer der Schleuse gelangte Wasser oder dergleichen muß abgeführt werden. Nach Öffnen der Absperrvorrichtung kann das Funktionselement durch die Schleuse in die Rohrleitung eingesetzt und die Schleuse abgenommen werden. Somit verbleibt allein das Halteelement mit dem Funktionselement an der Rohrleitung, durch die während des gesamten Vorgangs im wesentlichen unbeeinträchtigt Wasser oder dergleichen gefördert werden konnte.

Um den ggf. in einer der Schleusenkammern verbleibenden Restdruck abbauen zu können, weist die erste und/oder zweite Kammer der Schleuse erfindungsgemäß ein Ablaßventil auf.

Die Schleuse kann auf einfache Weise über eine Überwurfmutter an dem Montagestutzen des Halteelements angebracht werden.

Erfindungsgemäß kann ferner vorgesehen sein, daß zwischen Schleuse und Halteelement ein Distanzstück aus durchsichtigem Material, beispielsweise Acrylglas, vorgesehen ist, über das die Arbeit des Werkzeugs und das Montieren des Funktionselements am Halteelement überwacht werden kann.

Es zeigen:
- Fig. 1: eine Explosionsdarstellung des um die druckführende Leitung angeordneten Halteelements,
- Fig. 2: im Schnitt die erfindungsgemäße Vorrichtung montiert an der druckführenden Leitung vor Einsetzen des Funktionselements,
- Fig. 3: eine ähnliche Darstellung wie in Fig. 2 mit in die Leitung eingesetztem Funktionselement,
- Fig. 4A: eine Draufsicht auf das Funktionselement gemäß einer ersten Ausführungsform der Erfindung,
- Fig. 4B: einen Schnitt entlang der Linie B/B in Fig. 4A,
- Fig. 5A: eine Vorderansicht eines Funktionselements gemäß einer zweiten Ausführungsform der Erfindung,
- Fig. 5B: eine Vorderansicht eines dem Funktionselement gemäß Fig. 5A entsprechenden Halteelements,
- Fig. 6A: eine Vorderansicht eines Funktionselements gemäß einer dritten Ausführungsform der Erfindung,
- Fig. 6B: eine Vorderansicht eines dem Funktionselement gemäß Fig. 6A entsprechenden Halteelements,
- Fig. 7: eine perspektivische Ansicht der druckführenden Leitung nach Anbringen des Funktionselements.

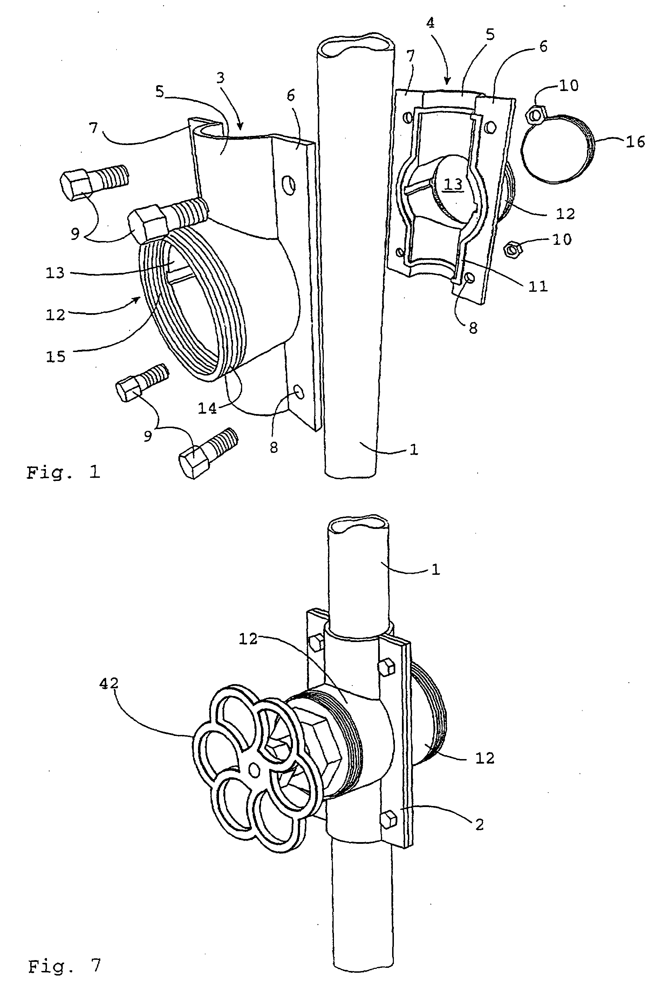

Die erfindungsgemäße Vorrichtung zum Anbringen von Funktionselementen, wie Schiebern, Ventilen, Wasser- oder Wärmemengenzähler, Mischern, Kugelhähnen oder dergleichen, an einer druckführenden Leitung 1 weist zunächst ein Halteelement 2 auf, das um die intakte Rohrleitung 1 aus Eisen, Kupfer, PE, PP oder dergleichen angeordnet wird. Hierzu besteht das Halteelement 2 aus zwei Flanschelementen 3, 4, die bei der in Fig. 1 dargestellten Ausführungsform identisch ausgebildet sind und jeweils einen dem Durchmesser der Rohrleitung 1 angepaßten Aufnahmeabschnitt 5 sowie sich daran anschließende Befestigungsabschnitte 6, 7 aufweisen. In den Befestigungsabschnitten 6, 7 sind Durchgangsöffnungen 8 für Befestigungsschrauben 9 vorgesehen, die mit Muttern 10 verschraubt werden. Ebensogut können die Flanschelemente 3, 4 aber auch durch Nieten, Verschweißen oder auf ähnliche Weise miteinander verbunden werden. Auf der Innenseite der Flanschelemente 3, 4 ist jeweils eine umlaufende Dichtung 11 vorgesehen, so daß die aneinander angebrachten Flanschelemente 3, 4 gegeneinander und gegenüber der Rohrleitung 1 abgedichtet sind. Die Flanschelemente 3, 4 weisen außerdem im Bereich der Aufnahmeabschnitte 5 einen Montagestutzen 12 mit einer Zugangsöffnung 13 auf. An dem Montagestutzen 12 ist sowohl ein Außengewinde 14 als auch ein Innengewinde 15 ausgebildet.

Auf die Zugangsöffnung 13 des hinteren Flanschelementes 4 wird ein Stopfen 16 mit einer Dichtscheibe 17 aufgeschraubt, so daß diese Zugangsöffnung 13 dicht verschlossen ist.

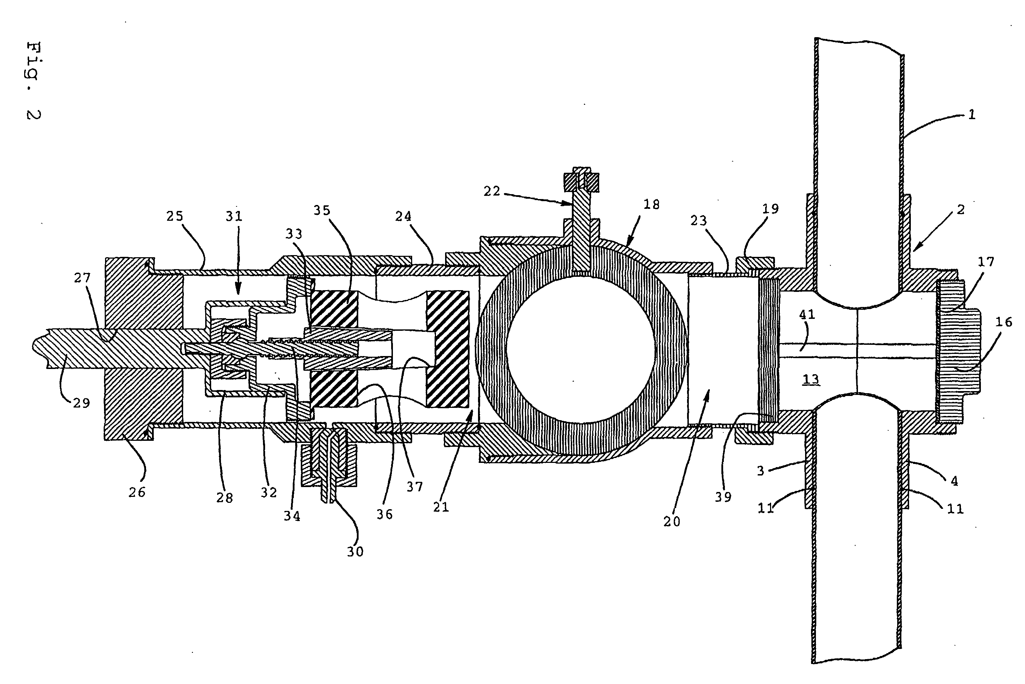

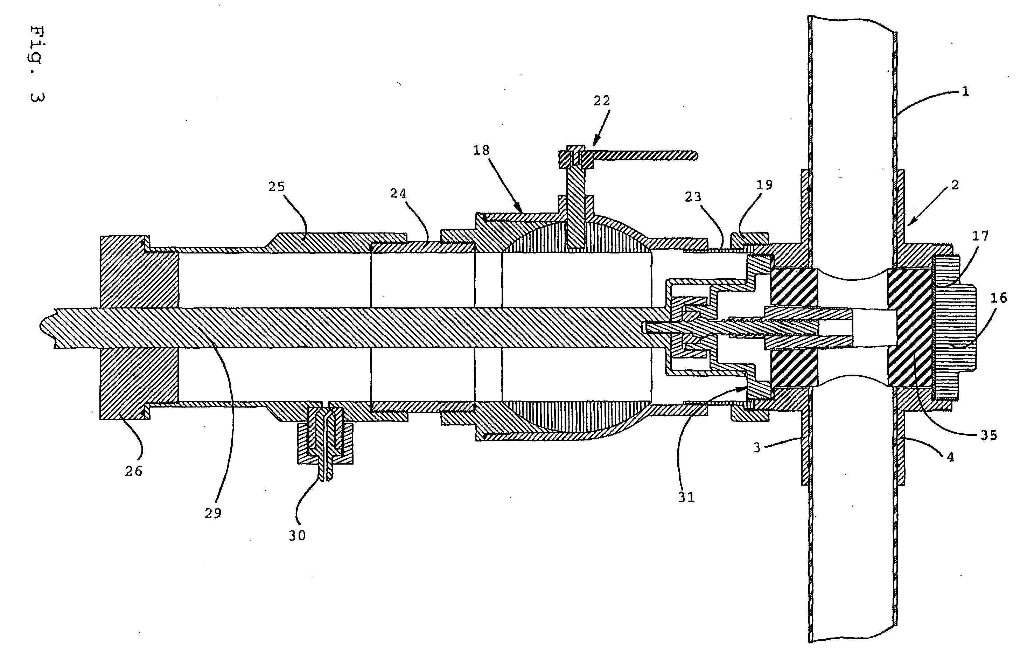

Anschließend wird an dem Montagestutzen 12 des vorderen Flanschelementes 3 eine Schleuse 18 befestigt, die mit Hilfe einer Überwurfmutter 19 an dem Außengewinde 14 des Montagestutzens 12 angebracht wird. Anstelle des mit der Überwurfmutter 19 zusammenwirkenden Außengewindes 14 kann die Verbindung zwischen Halteelement 2 und Schleuse 18 oder Stopfen 16 auch über eine Rutschkupplung, GK-Kupplung oder dergleichen erfolgen, die nach Abnahme der Schleuse 18 über Flanschschrauben gesichert wird. Dies ist insbesondere bei großen Rohrdurchmessern von Vorteil, bei denen üblicherweise nicht mehr mit Gewinden gearbeitet wird. Die Schleuse 18 ist in zwei Kammern 20, 21 unterteilt, die über eine Absperrvorrichung 22, bei der in der Zeichnung (Fig. 2 und 3) dargestellten Ausführungsform einem Kugelhahn, voneinander getrennt werden können. Die erste Kammer 19 geht in die Zugangsöffnung 13 des Flanschelementes 3 über, wobei ein Distanzstück 23 vorgesehen ist, das wenigstens teilweise aus durchsichtigem Material, beispielsweise Acrylglas besteht. An die der Rohrleitung 1 abgewandte zweite Kammer 21 schließen sich Distanzstücke 24, 25 an, die auf die Schleuse 18 aufgeschraubt sind und Aufnahmeräume für ein später zu beschreibendes Werkzeug bilden. Das Distanzstück 25 kann durch ein Verschlußelement 26 verschlossen werden, das ggf. auch direkt an der Schleuse 18 angebracht werden kann. In dem Verschlußelement 26 ist eine Durchtrittsöffnung 27 für eine einen Werkzeugkopf 28 tragende Achse 29 vorgesehen. Die Durchtrittsöffnung 27 ist hierbei gegenüber der Achse 29 abgedichtet.

Nach Montage der Vorrichtung an der Rohrleitung 1 wird ein Werkzeug, beispielsweise eine hier nicht dargestellte Bohrkrone, an dem Werkzeugkopf 28 befestigt und in die zweite Schleusenkammer 21 eingeführt, die dann über das Verschlußelement 26 verschlossen wird. Mit Hilfe des Werkzeugs, das über einen nicht dargestellten Antrieb angetrieben wird, kann nun die Rohrleitung 1 durchtrennt werden, wobei die beiden Leitungsenden über das Halteelement 2 fest und druckdicht miteinander verbunden werden. Der Antrieb oder das Werkzeug sollten eine Wegbegrenzung, beispielsweise einen Anschlag, aufweisen, um sicherzustellen, daß beim Durchtrennen der Leitung 1 der in der Flucht der Werkzeugachse liegende Stopfen 16 bzw. seine Dichtscheibe 17 nicht verletzt werden.

Nach Durchtrennen der Leitung 1 wird der Werkzeugkopf 28 mit dem Werkzeug durch die Schleuse 18 in die zweite Schleusenkammer 21 herausgezogen und die Schleuse 18 mit Hilfe der Absperrvorrichtung 22 geschlossen, so daß die Schleusenkammern 20, 21 voneinander getrennt sind. Fig. 2 zeigt die geschlossene Schleuse 18. Über ein Ablaßventil 30 kann nun in die zweite Kammer 21 eingetretenes Wasser abgelassen werden. Anschließend kann das Verschlußelement 26 geöffnet und mit dem Werkzeug aus der Vorrichtung entnommen werden. Nun wird an dem Werkzeugkopf 28 ggf. unter Zwischenschaltung einer speziellen Aufnahme ein Funktionselement 31 angebracht und in die zweite Kammer 21 eingesetzt (vgl. Fig. 2).

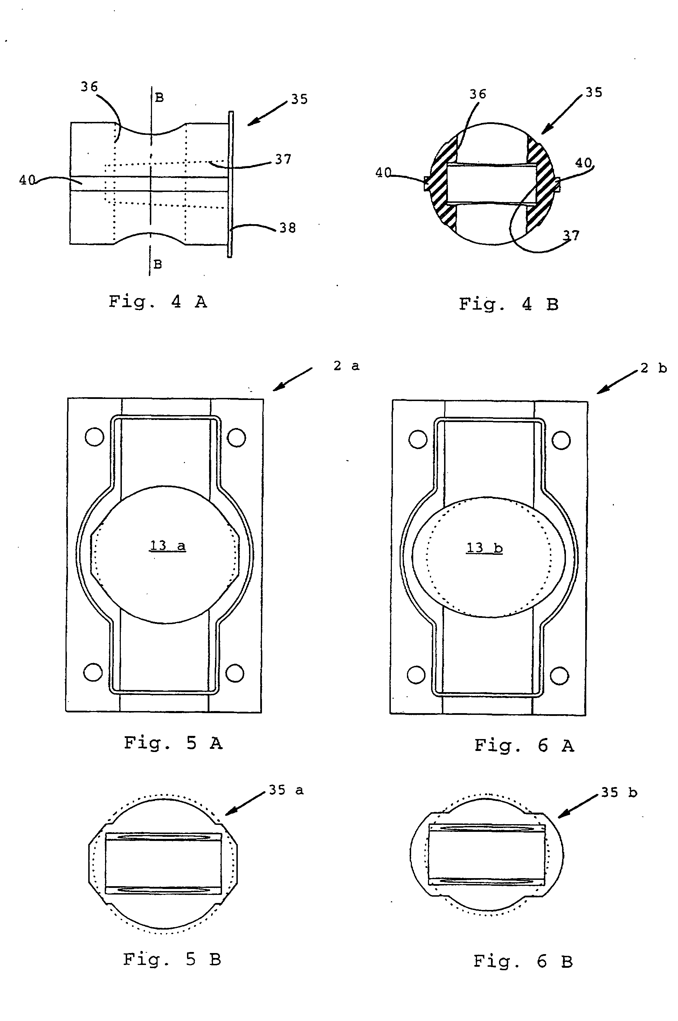

Dem Funktionselement 31, bei der dargestellten Ausführungsform ein Schieber mit einem Befestigungsabschnitt 32, einem Dichtabschnitt 33 und einer Verstelleinrichtung 34, ist ein auf ihn abgestimmter Funktionseinsatz 35 zugeordnet. Der Funktionseinsatz 35 ist in Fig. 4A und 4B im Detail dargestellt. Er besteht vorzugsweise aus Kunststoff und weist eine ihn senkrecht durchtretende Durchgangsöffnung 36 auf, die im montierten Zustand (Fig. 3) mit den Abschnitten der Rohrleitung 1 fluchtet. Von vorne weist der Funktionseinsatz 35 eine an den Dichtabschnitt 33 des Schiebers 31 angepaßte konische Aufnahmeöffnung 37 auf, die mit dem Dichtabschnitt 33 zur Abdichtung zusammenwirkt. An der Vorderseite weist der Funktionseinsatz 35 außerdem einen umlaufenden Vorsprung 38 auf, der in montiertem Zustand an einem Absatz 39 (Fig. 3) des Halteelements 2 anliegt und so die axiale Position des Funktionseinsatzes 35 festlegt. Um eine korrekte Ausrichtung des Funktionseinsatzes 35 in dem Halteelement 2 zu gewährleisten, weist er bei der in Fig. 4A und 4B dargestellten Ausführungsform radiale Vorsprünge (Flügel) 40 auf, die in entsprechende Nuten 41 in der Zugangsöffnung 13 des Halteelements 2 eingreifen und den Funktionseinsatz 35 gegen Verdrehen sichern. Gleichzeitig wird hierdurch eine Abdichtung der Rohrleitung 1 in vertikaler Richtung gewährleistet.

Wie aus den Fig. 5A, 5B und 6A, 6B ersichtlich ist, kann die Verdrehsicherung und Abdichtung des Funktionseinsatzes 35a, b auch durch andere Außenkonturen gewährleistet werden, sofern die Zugangsöffnung 13a, b des Halteelements 2a, b hierauf abgestimmt ist.

Das Funktionselement 31 und der Funktionseinsatz 35 werden gemeinsam oder nacheinander in die Rohrleitung 1 eingesetzt (Fig. 3). Hierbei muß die Schleuse 18 geschlossen sein, um ein Austreten von Wasser zu verhindern. Nachdem die zweite Kammer 21 über das Verschlußelement 26 druckdicht verschlossen wurde, wird die Schleuse 18 über die Absperrvorrichtung 22 geöffnet, so daß die Kammern 20 und 21 miteinander verbunden werden. Das Funktionselement 31 und der Funktionseinsatz 35 werden nun über die Achse 29 in die Rohrleitung 1 eingeschoben (vgl. Fig. 3), wobei das Einführen in die Leitung über das transparente Distanzstück 25 überwacht werden kann. Die korrekte Positionierung des Funktionselements 31 wird über die an dem Funktionseinsatz 35 vorgesehenen Vorsprünge 40 gewährleistet, die in Führungsnuten 41 in den Zugangsöffnungen 13 der Flanschelemente 3, 4 eingreifen. Der Funktionseinsatz 35 dichtet hierbei die Konstruktion in Richtung der Rohrleitung 1 (in der Zeichnung in Vertikalrichtung) ab. In Horizontalrichtung wird die Konstruktion einerseits durch den auf das Flanschelement 4 aufgeschraubten Stopfen 16 mit Dichtscheibe oder -ring 17 und andererseits über den Vorsprung 38 des Funktionseinsatzes 35 ggf. mit zusätzlichem Dichtring abgedichtet, der durch den in das Innengewinde 15 der Zugangsöffnung 13 eingeschraubten Befestigungsabschnitt 32 des Funktionselements 31 gehalten wird. Der Wasserfluß in Richtung der Rohrleitung 1 wird durch die Durchgangsöffnung 36 in dem Funktionseinsatz 35 gewährleistet.

Nach Einsetzen des Funktionselements 31 in die Rohrleitung 1 und Befestigung an dem Halteelement 2 wird die Schleuse 18 von dem Halteelement 2 abgenommen. An dem Funktionselement 31 kann nun ein Handrad 42 oder dergleichen befestigt werden, über das der Schieber des Funktionselements 31 betätigt werden kann (vgl. Fig. 5).

Es ergibt sich somit ein funktionstüchtiger Schieber, über den die Rohrleitung 1 nach Belieben verschlossen werden kann. Statt des Schiebers 31 kann selbstverständlich auch ein anderes Funktionselement eingesetzt werden, wobei es je nach Gestaltung des Funktionseinsatzes 35 möglich ist, unterschiedliche Funktionselemente einzusetzen. Hierzu müssen Aufnahmeöffnung 36 und Außenkanten des Funktionselements aufeinander abgestimmt sein. Ebensogut ist es möglich, für jedes Funktionselement einen hierauf abgestimmten Funktionseinsatz vorzusehen.

Mit der Erfindung kann das Funktionselement 31 an der Rohrleitung 1 angebracht werden, ohne daß das im Leitungssystem vorhandene Druckmedium abgelassen oder der Betrieb der Rohrleitung 1 unterbrochen werden müßte.

Der Funktionseinsatz kann mit Hilfe der Schleuse 18 nachträglich an der Leitung angebracht oder von vornherein an der Leitung vorgesehen werden, um unterschiedliche Funktionselemente einsetzen zu können. So kann ein Prüfer an einer Prüfstelle mit eigenen Funktionselementen unterschiedliche Parameter wie Wasserdurchsatz, -temperatur oder -beschaffenheit überprüfen, ohne daß die entsprechenden Meßarmaturen dauerhaft an der Leitung angebracht sein müssen.

### Bezugszeichenliste:

- 1: Leitung
- 2: Halteelement
- 3: Flanschelement
- 4: Flanschelement
- 5: Aufnahmeabschnitt
- 6: Befestigungsabschnitt
- 7: Befestigungsabschnitt
- 8: Durchgangsöffnung
- 9: Befestigungsschraube
- 10: Mutter
- 11: Dichtung
- 12: Montagestutzen
- 13: Zugangsöffnung
- 14: Außengewinde
- 15: Innengewinde
- 16: Stopfen
- 17: Dichtscheibe
- 18: Schleuse
- 19: Überwurfmutter
- 20: erste Kammer
- 21: zweite Kammer
- 22: Absperrvorrichtung
- 23: Distanzstück
- 24: Distanzstück
- 25: Distanzstück
- 26: Verschlußelement
- 27: Durchtrittsöffnung
- 28: Werkzeugkopf
- 29: Achse
- 30: Ablaßventil
- 31: Funktionselement
- 32: Befestigungsabschnitt
- 33: Dichtabschnitt
- 34: Verstelleinrichtung
- 35: Funktionseinsatz
- 36: Durchgangsöffnung
- 37: Aufnahmeöffnung
- 38: Vorsprung
- 39: Absatz
- 40: Vorsprung
- 41: Führungsnuten
- 42: Handrad

## Patentansprüche

1. Vorrichtung zum Anbringen von Funktionselementen (31), wie Schiebern, Ventilen, Wasser- oder Wärmemengenzählern, Mischern, Kugelhähnen oder dergleichen, an einer Leitung (1), mit einem an der Leitung (1) anzubringenden Halteelement (2), in dem eine Durchtrittsöffnung für das in der Leitung (1) fließende Medium und eine von der Durchtrittsöffnung abzweigende Zugangsöffnung (13) ausgebildet sind, **gekennzeichnet durch** einen **durch** die Zugangsöffnung (13) in die Durchtrittsöffnung des Halteelements (2) einsetzbaren, austauschbaren Funktionseinsatz (35), der eine Durchtrittsöffnung (36) für das in der Leitung (1) fließende Medium und eine Aufnahmeöffnung (37) für das Funktionselement (31) aufweist.

2. Vorrichtung nach Anspruch 1, **dadurch gekennzeichnet, daß** der Funktionseinsatz (35) verdrehsicher in der Zugangsöffnung (13) des Halteelements (2) aufgenommen ist.

3. Vorrichtung nach Anspruch 2, **dadurch gekennzeichnet, daß** die Zugangsöffnung (13) und der Funktionseinsatz (35) wenigstens abschnittsweise unrund ausgebildet sind.

4. Vorrichtung nach Anspruch 2 oder 3, **dadurch gekennzeichnet, daß** in der Zugangsöffnung (13) des Halteelements (2) Führungsnuten (41) zur Positionierung des Funktionseinsatzes (35) ausgebildet sind.

5. Vorrichtung nach Anspruch 4, **dadurch gekennzeichnet, daß** an dem Funktionseinsatz (35) Vorsprünge (40) für den Eingriff in die Führungsnuten (41) des Halteelements (2) ausgebildet sind.

6. Vorrichtung nach einem der Ansprüche 1 bis 5, **dadurch gekennzeichnet, daß** der Funktionseinsatz (35) an seinem axialen Ende einen vorzugsweise umlaufenden Vorsprung (38) aufweist.

7. Vorrichtung nach einem der Ansprüche 1 bis 6, **dadurch gekennzeichnet, daß** der Funktionseinsatz (35) aus Kunststoff besteht.

8. Vorrichtung nach einem der Ansprüche 1 bis 7 **dadurch gekennzeichnet, daß** in der Zugangsöffnung (13) ein Innengewinde (15) für die Befestigung des Funktionselements (31) ausgebildet ist.

9. Vorrichtung nach einem der Ansprüche 1 bis 8, **dadurch gekennzeichnet, daß** das Halteelement (2) zwei Flanschelemente (3, 4) aufweist, die einen der Rohrleitung (1) angepaßten Aufnahmeabschnitt (5) aufweisen und miteinander über Befestigungsschrauben (9), Nieten oder dergleichen verbindbar sind.

10. Vorrichtung nach Anspruch 9, **dadurch gekennzeichnet, daß** beide Flanschelemente (3, 4) identisch ausgebildet sind.

11. Vorrichtung nach Anspruch 9 oder 10, **dadurch gekennzeichnet, daß** auf der Innenseite der Flanschelemente (3, 4) ein vorzugsweise umlaufendes Dichtungselement (11) vorgesehen ist.

12. Vorrichtung nach einem der Ansprüche 1 bis 11, **dadurch gekennzeichnet, daß** die Zugangsöffnung (13) in einem Montagestutzen (12) mit einem Außengewinde (14), einer Schnellkupplung oder dergleichen ausgebildet ist.

13. Vorrichtung nach einem der Ansprüche 1 bis 12, **gekennzeichnet durch** einen Schleusenaufsatz (18), der an dem Halteelement (2) angebracht wird und zwei über eine Absperrvorrichtung (22) wahlweise verbindbare oder trennbare Kammern (20, 21) aufweist, wobei die erste Kammer (20) mit der Zugangsöffnung (13) in dem Halteelement (2) verbunden wird, wobei die zweite Kammer (21) über ein Verschlußelement (26) verschließbar ist, und wobei das Verschlußelement eine Durchtrittsöffnung (27) für die Durchführung einer ein Werkzeug, Funktionselement (31) oder dergleichen tragenden Achse (29) aufweist, welche gegenüber der Durchtrittsöffnung (27) abgedichtet ist.

14. Vorrichtung nach Anspruch 13, **dadurch gekennzeichnet, daß** die erste und/oder die zweite Kammer (20, 21) der Schleuse (18) ein Ablaßventil (30) zum Ablassen eines in der Kammer (20, 21) bestehenden Druckes aufweisen.

15. Vorrichtung nach Anspruch 12 und 13, **dadurch gekennzeichnet, daß** die Schleuse (18) über eine Überwurfmutter (19) an dem Montagestutzen (12) des Halteelements (2) befestigt wird.

16. Vorrichtung nach einem der Ansprüche 13 bis 15, **dadurch gekennzeichnet, daß** zwischen der Schleuse (18) und dem Halteelement (2) ein aus durchsichtigem Material, beispielsweise Acrylglas, bestehendes Distanzstück (23) vorgesehen ist.

## Claims

1. Device for attaching functional elements (31), such as slides, valves, water meters or calorimeters, mixers, ball valves or the like, to a line (1) with a retaining element (2) to be attached to the line (1) in which a through-aperture for the medium flowing in the line (1) and an access aperture (13) branching off from the through-aperture are formed, **characterised by** a replaceable functional insert (35) which can be inserted through the access aperture (13) into the through-aperture of the retaining element (2), which functional insert (35) has a through-aperture (36) for the medium flowing in the line (1) and a receiving aperture (37) for the functional element (31).

2. Device according to claim 1, **characterised in that** the functional insert (35) is received in the access aperture (13) of the retaining element (2) so as to be secured against rotation.

3. Device according to claim 2, **characterised in that** the access aperture (13) and the functional insert (35) are formed so as to be non-circular at least in portions.

4. Device according to claim 2 or 3, **characterised in that** guide grooves (41) for positioning the functional insert (35) are formed in the access aperture (13) of the retaining element (2).

5. Device according to claim 4, **characterised in that** projections (40) for engagement in the guide grooves (41) of the retaining element (2) are formed on the functional insert (35).

6. Device according to one of claims 1 to 5, **characterised in that** the functional insert (35) has a preferably peripheral projection (38) at its axial end.

7. Device according to one of claims 1 to 6, **characterised in that** the functional insert (35) consists of plastics material.

8. Device according to one of claims 1 to 7, **characterised in that** an internal screw thread (15) for securing the functional element (31) is formed in the access aperture (13).

9. Device according to one of claims 1 to 8, **characterised in that** the retaining element (2) has two flange elements (3, 4) which have a receiving portion (5) adapted to the pipeline (1) and which can be connected to one another by fastening screws (9), rivets or the like.

10. Device according to claim 9, **characterised in that** the two flange elements (3, 4) are identical in design.

11. Device according to claim 9 or 10, **characterised in that** a preferably peripheral sealing element (11) is provided on the interior of the flange elements (3, 4).

12. Device according to one of claims 1 to 11, **characterised in that** the access aperture (13) is formed in a connecting piece (12) with an external screw thread (14), a quick-fitting pipe union or the like.

13. Device according to one of claims 1 to 12, **characterised by** a sluice cap (18) which is attached to the retaining element (2) and has two chambers (20, 21) which can optionally be connected or separated by a blocking device (22), the first chamber (20) being connected to the access aperture (13) in the retaining element (2), wherein the second chamber (21) can be sealed by a sealing element (26), and wherein the sealing element has a through-aperture (27) for the passage of a shaft (29) supporting a tool, functional element (31) or the like, which shaft is sealed with respect to the through-aperture (27).

14. Device according to claim 13, **characterised in that** the first and/or the second chamber (20, 21) of the sluice (18) has a discharge valve (30) for lowering a pressure on the chamber (20, 21).

15. Device according to claim 12 and 13, **characterised in that** the sluice (18) is secured by a union nut (19) to the assembly connection piece (12) of the retaining element (2).

16. Device according to one of claims 13 to 15, **characterised in that** a spacer (23) which consists of a transparent material, for example acrylic glass, is provided between the sluice (18) and the retaining element (2).

## Revendications

1. Dispositif pour fixer des éléments fonctionnels (31), tels que des obturateurs, des valves, des compteurs d'eau, des calorimètres, des mélangeurs, des robinets à billes ou des éléments similaires, à un tuyau (1), avec un élément de retenue (2) à fixer au tuyau (1) et dans lequel sont formées une ouverture d'entrée pour le fluide circulant dans le tuyau (1) et une ouverture d'accès (13) dérivant de l'ouverture d'entrée, **caractérisé par** un insert fonctionnel (35) échangeable pouvant être inséré dans l'ouverture d'entrée de l'élément de retenue (2) par l'ouverture d'accès (13) et qui présente une ouverture d'entrée (36) pour le fluide circulant dans le tuyau (1) et une ouverture de réception (37) pour l'élément fonctionnel (31).

2. Dispositif selon la revendication 1, **caractérisé en ce que** l'insert fonctionnel (35) est reçu dans l'ouverture d'accès (13) de l'élément de retenue (2) de façon à ne pas pouvoir être tourné.

3. Dispositif selon la revendication 2, **caractérisé en ce que** l'ouverture d'accès (13) et l'insert fonctionnel (35) ont une forme au moins partiellement non circulaire.

4. Dispositif selon la revendication 2 ou 3, **caractérisé en ce que** des rainures de guidage (41) sont formées dans l'ouverture d'accès (13) de l'élément de retenue (2) pour le positionnement de l'insert fonctionnel (35).

5. Dispositif selon la revendication 4, **caractérisé en ce que** des saillies (40) sont formées sur l'insert fonctionnel (35) pour s'engrener dans les gorges de guidage (41) de l'élément de retenue (2).

6. Dispositif selon l'une des revendications 1 à 5, **caractérisé en ce que** l'insert fonctionnel (35) présente à son extrémité axiale une saillie (38) de préférence circulaire.

7. Dispositif selon l'une des revendications 1 à 6, **caractérisé en ce que** l'insert fonctionnel (35) est en matière plastique.

8. Dispositif selon l'une des revendications 1 à 7, **caractérisé en ce qu**'un filetage interne (15) est formé dans l'ouverture d'accès (13) pour la fixation de l'élément fonctionnel (31).

9. Dispositif selon l'une des revendications 1 à 8, **caractérisé en ce que** l'élément de retenue (2) présente deux éléments de bride (3, 4) qui sont munis d'une section de réception (5) adaptée au tuyau (1) et qui peuvent être reliés l'un à l'autre par des vis de fixation (9), des rivets ou des éléments similaires.

10. Dispositif selon la revendication 9, **caractérisé en ce que** les deux éléments de bride (3, 4) sont de forme identique.

11. Dispositif selon la revendication 9 ou 10, **caractérisé en ce qu**'un élément d'étanchéité (11) faisant de préférence le tour est prévu sur la face interne des éléments de bride (3, 4).

12. Dispositif selon l'une des revendications 1 à 11, **caractérisé en ce que** l'ouverture d'accès (13) est formée dans un fourreau de montage (12) avec un filetage externe (14), un raccord rapide ou un élément similaire.

13. Dispositif selon l'une des revendications 1 à 12, **caractérisé par** une couronne de sas (18) qui est fixée à l'élément de retenue (2) et qui présente deux chambres (20, 21) pouvant être au choix reliées ou séparées par un dispositif d'obturation (22), la première chambre (20) étant reliée à l'ouverture d'accès (13) dans l'élément de retenue (2), la deuxième chambre (21) pouvant être obturée par un élément d'obturation (26) et l'élément d'obturation présentant une ouverture d'entrée (27) pour le passage d'un axe (29) portant un outil, un élément fonctionnel (31) ou un élément similaire, ledit axe (29) étant rendu étanche par rapport à l'ouverture d'entrée (27).

14. Dispositif selon la revendication 13, **caractérisé en ce que** la première et / ou la deuxième chambre (20, 21) du sas (18) présente une soupape de vidange (30) pour évacuer une pression présente dans la chambre (20, 21).

15. Dispositif selon la revendication 12 et 13, **caractérisé en ce que** le sas (18) est fixé sur le fourreau de montage (12) de l'élément de retenue (2) par un écrou à chapeau (19).

16. Dispositif selon l'une des revendications 13 à 15, **caractérisé en ce qu**'il est prévu entre le sas (18) et l'élément de retenue (2) une pièce d'écartement (23) fabriquée dans un matériau transparent, par exemple du verre acrylique.
